# EUROPEAN PATENT APPLICATION

(11) **EP 3 261 292 A1**
(43) Date of publication of application: **27.12.2017**
(21) Application number: 16305750.8
(22) Date of filing: 21.06.2016
(51) Int. Cl.: H04L 12/24, H04L 12/707

(54) **METHOD AND SYSTEM FOR AUTOMATING ASSESSMENT OF NETWORK QUALITY OF EXPERIENCE**

(71) Applicant: ALCATEL LUCENT, 92100 Boulogne-Billancourt (FR)
(72) Inventor: LIGATA, Amir, 2018 Antwerp (BE); GACANIN, Haris, 2018 Antwerp (BE)
(74) Representative: D'Halleweyn, Nele Veerle Trees Gertrudis

(57) **Abstract**

A method of automating assessment of a network's QoE comprising: receiving a first number of quality of service, QoS, metrics, wherein the first number of QoS metrics pertains to a QoS of the network at a first moment in time; receiving, from a reference device subject to the QoE of the network, a first number of quality of experience, QoE, metrics, wherein the first number of QoE metrics pertains to the QoE of the network at a second moment in time, wherein a time difference between the first moment and the second moment is less than a predetermined time threshold; and based on the first number of QoS metrics and the first number of QoE metrics, determining a mapping relationship from at least a subset of the first number of QoS metrics to at least a subset of the first number of QoE metrics, using a machine learning technique.

## Description

### Field of Invention

The field of the invention relates to estimating quality of experience (QoE). Particular embodiments relate to a method of, a computer program for, and a system for automating assessment of QoE in a network.

### Background

Wi-Fi technology has fueled the rapid development of home networks and extended the number of applications used by end users. In order to tackle problems that an end user might experience, service providers are focusing on optimizing quality of service (QoS) by inspecting network parameters acquired through some of the available protocols (e.g. Broadband Forum technical reports TR-98 and TR-181).

However, service providers intend to shift from a network-centric approach focused on QoS to a user-centric approach focused on quality of experience (QoE), because QoE of a network is more important than QoS of the network for an end user of the network.

Estimating QoE is sensitive and non-trivial, as it requires capturing a subjective measure of user satisfaction (i.e. assessing QoE).

### Summary

A problem associated with estimating QoE is that there are no well-defined objective mechanisms for quantifying user satisfaction (i.e. QoE). Deriving conclusions concerning QoE from inspecting the acquired QoS is difficult and requires expert domain knowledge. Furthermore, it is case-dependent and cannot be generalized to a particular service. Therefore, a user-centric approach requires insight into QoE, as experienced by an end user.

Embodiments of the invention aim to provide a more objective approach to estimating QoE, in at least the sense that the QoE estimation corresponds more closely to the end user's experienced QoE.

According to a first aspect of the invention there is provided a method of automating assessment of quality of experience, QoE, of a network. The method comprises the following steps performed by a computing device, preferably at a management centre or the like. The method comprises receiving - for example from a gateway or access point or the like of the network - a first number of quality of service, QoS, metrics. The first number of QoS metrics pertains to a QoS of the network at a first moment in time. The method comprises receiving, from a reference device subject to the QoE of the network, a first number of quality of experience, QoE, metrics. The first number of QoE metrics pertains to the QoE of the network at a second moment in time. A time difference between the first moment in time and the second moment in time is less than a predetermined time threshold. The method comprises, based on the received first number of QoS metrics and the received first number of QoE metrics, determining a mapping relationship from at least a subset of the received first number of QoS metrics to at least a subset of the received first number of QoE metrics, using a machine learning technique.

Embodiments of the invention are based *inter alia* on the insight that using a reference device that is subject to the QoE of the network under consideration (e.g. by being connected to the network, and/or by experiencing network traffic via the network) and that receiving the first number of QoS metrics and receiving the first number of QoE metrics that are sufficiently near to each other in time allows to learn a mapping relationship from the first number of QoS metrics to the first number of QoE metrics. The first number of QoE metrics may have been obtained by the reference device of its own accord, at the time of deployment or re-deployment of the network or periodically, or on demand of an operator. The learned mapping relationship allows to map, in future, from newly acquired QoS metrics to corresponding QoE metrics, without having to explicitly acquire those QoE metrics from the network.

In a particular embodiment, the network may be a home network, such as an end user's in-house network, or a company's in-house network, or the like, connected to a wide-area network (e.g. the internet) via e.g. a gateway. The gateway may be configured to obtain the first number of QoS metrics, because the gateway can analyze network parameters relevant for QoS. The reference device may be the gateway, but may alternatively be another device, for example a dedicated reference device, or may be a general computing device equipped with purpose-built software, and may be configured for acquiring the first number of QoE metrics. In a particular exemplary embodiment, the reference device may preferably be a mobile device loaded with an application configured to allow a technician to acquire the first number of QoE metrics, for example at a time of deployment or re-deployment or maintenance of the network.

According to a preferred embodiment, the method comprises receiving a second number of QoS metrics. The second number of QoS metrics pertains to the QoS of the network at a third moment in time different from the first moment in time. The method further comprises mapping at least a subset of the received second number of QoS metrics to a second number of QoE metrics, by means of the mapping relationship, in order to assess QoE of the network - that is, in order to estimate user satisfaction of the network.

In this way, the method may allow to automatically assess QoE of the network.

According to a further developed embodiment, the determining of the mapping relationship comprises determining a correlation between the first number of QoS metrics and the first number of QoE metrics. The determining of the mapping relationship further comprises, based on the determined correlation, selecting a subset of the first number of QoS metrics as the subset from which to map in the mapping relationship.

In this way, the method may take into account especially or only those QoS metrics that contribute most to (i.e. have most impact on) the QoE of the network.

According to another further developed embodiment, the selecting of the subset of the first number of QoS metrics may preferably comprise selecting QoS metrics from the first number of QoS metrics, for which selected QoS metrics the determined correlation exceeds a predetermined threshold.

According to another preferred embodiment, the determining of the mapping relationship comprises selecting from at least the subset of the received first number of QoS metrics a training subset for learning the mapping relationship and a validation subset for evaluating the learned mapping relationship. The determining of the mapping relationship further comprises learning the mapping relationship based on the selected training subset. The determining of the mapping relationship further comprises evaluating the learned mapping relationship based on the selected validation subset.

In this way, overfitting may be avoided.

In a particular exemplary embodiment, the training subset and the validation subset may be entirely distinct, or there may be some overlap (for example, by using cross-validation techniques, or the like).

According to another further developed embodiment, the selecting of the validation subset comprises determining a variance for at least one QoS metric of the received first number of QoS metrics; and, based on the determined variance, selecting QoS metrics from the at least one QoS metric as the validation subset.

In this way, the training subset and validation subset may be chosen to statistically resemble the original received first number of QoS metrics.

In a particular exemplary embodiment, the validation subset may be selected by choosing those QoE metrics for which the variance in the training subset is highest.

According to another preferred embodiment, the machine learning technique comprises estimating a regression model for mapping from at least the subset of the received first number of QoS metrics to at least the subset of the received first number of QoE metrics. In a specific further developed embodiment, the machine learning technique may involve learning a decision tree adapted for classifying QoE metrics into discrete categories. In this way, the mapping relationship may allow for fast assessment of the QoE of the network.

According to another further developed embodiment, at least one of the first number of QoS metrics and the second number of QoS metrics comprises any one or more of the following metrics: retransmission rate; error rate; signal strength; channel utilization; activity factor; contention factor; discarded packets; transmit power; signal-to-noise ratio (SNR); signal-to-noise plus interference ratio (SINR); and queueing statistics

In this way, the method may take into account easily determined network-oriented network parameters, that may impact QoE of the network.

According to another further developed embodiment, at least one of the first number of QoE metrics and the second number of QoE metrics comprises any one or more of the following metrics: buffering ratio; rate of buffering events; bitrate; streaming rate; burst streaming rate; video quality; initial buffering time; stalling frequency; and average duration of stalls.

It will be understood that at least some of the aforementioned QoE metrics may be referred to as "application QoS metrics". Nonetheless, derivation of a QoE metric mean opinion score (MOS) is straightforward for the skilled person (using known models) from such application QoS metrics, which may therefore be referred to as QoE metrics.

In this way, the method may take into account easily determined end user-oriented network parameters, that may depend on QoS of the network.

According to a specific further developed embodiment, the method may further comprise at least one of the following, based on the assessment of the QoE of the network: notifying the end user, optimizing a number of settings of the network, or dispatching a truck roll.

According to another aspect of the invention, computer program product comprising a computer-executable program of instructions for performing, when executed on a computer, the steps of any one of the methods described hereinabove.

The features and advantages described hereinabove for embodiments of the method may also apply, *rmrtntis mutandis,* for corresponding embodiments of the computer program product.

According to yet another aspect of the invention, there is provided an apparatus for automating assessment of quality of experience, QoE, of a network; the apparatus comprising a processor configured for executing a computer-executable program of instructions for performing the steps of any one of the methods described hereinabove.

The features and advantages described hereinabove for embodiments of the method may also apply, *mutatis mutandis*, for corresponding embodiments of the apparatus.

In a particular embodiment, the processor may be configured for receiving a first number of quality of service, QoS, metrics, wherein the first number of QoS metrics pertains to a QoS of the network at a first moment in time. The processor may further be configured for receiving, from a reference device subject to the QoE of the network, a first number of quality of experience, QoE, metrics, wherein the first number of QoE metrics pertains to the QoE of the network at a second moment in time, wherein a time difference between the first moment in time and the second moment in time is less than a predetermined time threshold. The processor may further be configured for, based on the received first number of QoS metrics and the received first number of QoE metrics, determining a mapping relationship from at least a subset of the received first number of QoS metrics to at least a subset of the received first number of QoE metrics, using a machine learning technique.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a setup for an embodiment of an apparatus according to the present invention, for performing an embodiment of a method according to the present invention;
Figure 2 illustrates schematically an embodiment of a method according to the present invention, for example the embodiment of Figure 1; and
Figure 3 illustrates schematically another embodiment of a method according to the present invention, for example a further development of the embodiment of Figure 1.

### Description of embodiments

Currently, service providers are estimating user satisfaction by using "mean opinion score" (MOS), which assigns a value between 1 and 5 reflecting the customer experience scoring. This approach, however, has multiple drawbacks:
Firstly, it involves user interaction. Some users do not appreciate this, and it can be bias-sensitive. The bias can be eliminated by averaging, but this requires a large amount of data.
Secondly, in most of the cases, it refers to previous (and therefore outdated) experience.
And thirdly, it is difficult to correlate a MOS with the root cause embedded in quality of service (QoS) statistics.

Therefore, there is a need for a mechanism that bridges the gap between QoS and QoE (quality of experience) related statistics in networks, in particular home network. This mechanism may be applied especially advantageously in the context of video streaming applications, as these consume more then half of the total internet traffic.

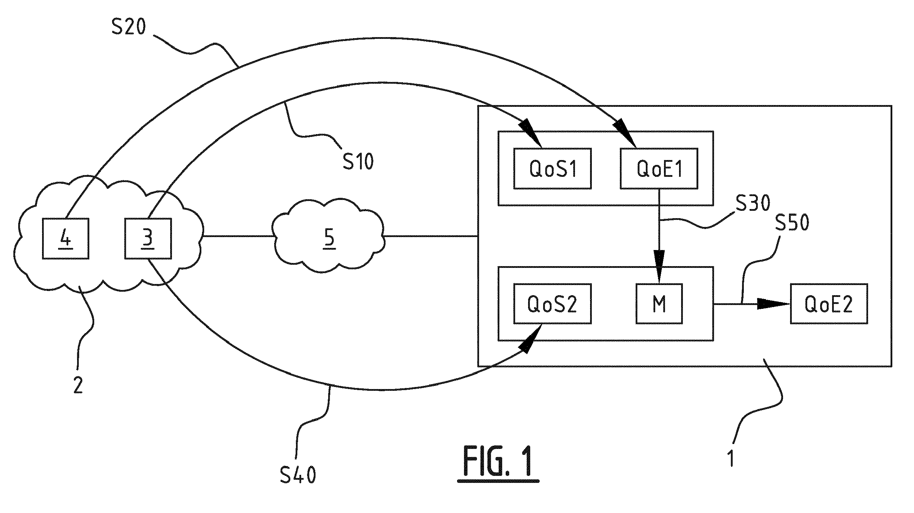

Figure 1 illustrates schematically a setup for an embodiment of an apparatus 1 according to the present invention, for performing an embodiment of a method according to the present invention. The figure shows apparatus 1, which may be a computing device situated at a management centre of an operator providing network access to network 2), connected via wide area network 5 (e.g. the internet) to network 2 (e.g. a home network). Network 2 may comprise gateway 3, via which it is connected to wide area network 5. Network 2 may further comprise reference device 4, or reference device 4 may be subject to quality of experience (QoE) of network 2, allowing reference device 4 to acquire QoE metrics pertaining to network 2.

Figure 1 further shows that, in operation S10, apparatus 1 receives a first number of quality of service, QoS, metrics, indicated in the figure as an arrow delivering data item QoS1 to apparatus 1. The first number of QoS metrics QoS 1 pertains to a QoS of network 2 at a first moment in time. In a first embodiment, the first number of QoS metrics QoS1 may pertain to the QoS of network 2 at the moment in time that they are sent for the receiving. In a second embodiment, the first number of QoS metrics QoS1 may pertain to the QoS of network 2 at a moment in time prior to the moment in time that they are sent for the receiving. The first number of QoS metrics QoS1 may be determined (i.e. measured or estimated) by gateway 3, or by another suitably configured device situated in or connected to network 2. The first number of QoS metrics QoS1 may be periodically collected by gateway 3 or the other suitably configured device, or may be collected once - and either of its own accord, for example by having been programmed to do so, or in response to a request, for example on-demand on a command sent by e.g. apparatus 1.

The first number of QoS metrics QoS1 may comprise metrics that are derived from network parameters that can be acquired via the Broadband Forum technical report TR-181 network protocol, or the like. The first number of QoS metrics QoS1 may comprise such metrics as the retransmission rate, the error rate, the signal strength, the channel utilization, the activity factor, the contention factor, the (number of) discarded packets, the transmit power, the signal-to-noise ratio (SNR), the signal-to-noise plus interference ratio (SINR), and queueing statistics. Such metrics can easily be determined and collected, because they relate to network behaviour, and are thus readily accessible for devices such as gateway 3.

Apparatus 1 may receive the first number of QoS metrics QoS1 as such, or as part of a raw data set and then may process at least part of that raw data set in order to derive the first number of QoS metrics QoS1.

The first number of QoS metrics QoS1 may comprise 1, 2, 3, 4, 5 or more metrics, e.g. 10 or 15 metrics.

Figure 1 further shows that, in operation S20, apparatus 1 receives a first number of quality of experience, QoE, metrics, indicated in the figure as an arrow delivering data item QoE1 to apparatus 1. The first number of QoE metrics QoE1 may be received from reference device 4, which is subject to the QoE of network 2 by virtue of being situated therein or being connected thereto. The first number of QoE metrics QoE1 may be transmitted via the connection between network 2 and wide are network 5, or may be transmitted via another route, for example via a direct connection (not shown) between reference device 4 and apparatus 1, or via a cellular data connection (not shown), or the like. The first number of QoE metrics QoE1 pertains to the QoE of network 2 at a second moment in time. In one embodiment, the first number of QoE metrics QoE1 may pertain to the QoE of network 2 at the moment in time that they are sent by reference device 4. In another embodiment, the first number of QoE metrics QoE1 may pertain to the QoE of network 2 at a moment in time prior to the moment in time that they are sent by reference device 4. The first number of QoE metrics QoE1 may be determined (i.e. measured or estimated) by reference device 4, or by another suitably configured device situated in or connected to network 2, in such a way as to be subject to the QoE of network 2. The first number of QoE metrics QoE1 may be periodically collected by reference device 3 or the other suitably configured device, or may be collected once - and either of its own accord, for example by having been programmed to do so, or in response to a request, for example on-demand on a command sent by e.g. apparatus 1, or in response to a request by the end user or by a technician.

A time difference between the first moment in time and the second moment in time is less than a predetermined time threshold. The predetermined time threshold may for example be of the order of 10 ms, preferably 1 s, or 60 s or 3600 s. By being situated near enough to each other in time (which may for example be guaranteed by comparing timestamps associated with each respective metric), it can be presumed that first number of QoS metrics QoS1 and the first number of QoE metrics QoE1 allow to infer a relationship between them.

The first number of QoE metrics QoE1 may comprise metrics that relate to an end user's experience of network 2, and may for example comprise such metrics as the buffering ratio, the rate of buffering events, the bitrate, the streaming rate; the burst streaming rate; the video quality; the initial buffering time, the stalling frequency, the average duration of stalls, and the like, because such metrics may have appreciable impact on the end user's experience of network 2.

Apparatus 1 may receive the first number of QoE metrics QoE1 as such, or as part of a raw data set and then may process at least part of that raw data set in order to derive the first number of QoE metrics QoE1.

The first number of QoE metrics QoE1 may comprise 1, 2, 3, 4, 5 or more metrics, e.g. 10 or 15 metrics.

Figure 1 further shows that, in operation S30, apparatus 1 determines a mapping relationship from at least a subset of the received first number of QoS metrics QoS1 to at least a subset of the received first number of QoE metrics QoE1, based on the received first number of QoS metrics QoS1 and the received first number of QoE metrics QoE1. To this end, apparatus 1 may use a machine learning technique. The determining of the mapping relationship may preferably occur offline, for example when network 2 is first deployed or is re-deployed or is subject to maintenance or troubleshooting.

In a particular exemplary embodiment, apparatus 1 may store the first number of QoS metrics QoS1 in a vector **QoS** and may store the first number of QoE metrics QoE1 in a vector **QoE**. Apparatus 1 may calculate a correlation between vectors **QoS** and **QoE.** Apparatus 1 may select a subset of vector **QoS**, named **QoS_{sub.} QoS_{sub}** may be selected to contain those QoS metrics of the first number of QoS metrics QoS1 that have the highest correlation index, that is, the highest impact on quality of experience.

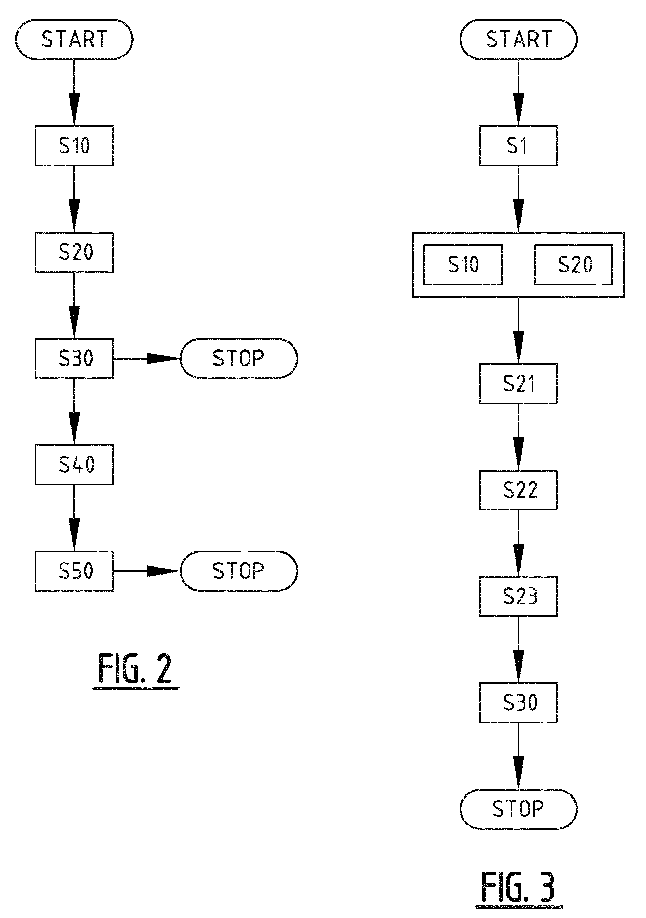

In another particular exemplary embodiment, apparatus 1 may divide the initial data set, including **QoS** (or **QoS_{sub}**) and **QoE** into two subset: an estimation or training subset, and a validation subset (cf. optional operation S21 shown in Figure 3). The estimation or training subset may be selected to have a variance as close as possible to the initial data set, in order to have values across many, preferably all possible states.

In a further particular exemplary embodiment, apparatus 1 may determine the mapping relationship using such machine learning techniques as regression learning with multiple variables, as a mapping relationship **M,** from **QoS** (or **QoS_{sub}**) to **QoE**.

In another particular exemplary embodiment, apparatus 1 may validate the accuracy of the determined mapping relationship **M** by evaluating its performance on predicting QoE for the validation subset, in order to avoid overfitting to the initial data set (cf. optional operation S23 shown in Figure 3).

Figure 1 further shows that, in operation S40, apparatus 1 receives a second number of QoS metrics TODO. The second number of QoS metrics QoS2 pertains to the QoS of the network at a third moment in time. The third moment may differ from the first moment in time, thus separating a training phase wherein the mapping relationship **M** was determined in order to automate assessment of QoE of network 2, from a live phase wherein QoE of network 2 may be automatically assessed.

Figure 1 further shows that, in operation S50, apparatus 1 maps at least a subset of the second number of QoS metrics QoS2 to a second number of QoE metrics QoE2, by means of the mapping relationship **M,** in order to assess QoE of network 2.

In this way, the method allows to automatically assess QoE of network 2 at a later moment in time (for example at or around the third moment in time) by requiring only knowledge of the second number of QoS metrics QoS2 at that time and by inferring in operation S50 from the second number of QoS metrics QoS2 the corresponding second number of QoE metrics QoE2 at or around that time. The second number of QoE metrics QoE2 may pertain to QoE of network 2 closer or farther in time from the third moment in time, depending on how close or far in time the first and second moment in time were to or from each other.

In other words, the mapping relationship **M** is determined in operation S30 and may be used in operation S50 to estimate the user-satisfaction (which is a qualitative value) - for example for video streaming applications - as represented by the second number of QoE metrics QoE2 (which are quantitative values), based on the second number of QoS metrics QoS2.

Furthermore, the method may be advantageous in the sense that QoE is assessed in a more objective manner, which reduces the chance of human bias which might be introduced via user interaction (for example in scoring MOS values). Moreover, the method may be advantageous in the sense that it may identify those QoS metrics that have the highest impact (in a statistical sense) on the end user satisfaction. Moreover, the method may be advantageous in the sense that it may produce a mapping relationship **M** that may be stored or copied for reuse for other networks than network 2 which use (largely) the same QoS metrics that were used for determining the mapping relationship **M.**

Figure 2 illustrates schematically an embodiment of a method according to the present invention, for example the embodiment of Figure 1, for example executed by apparatus 1 of Figure 1. The illustrated method may be suitable for automating assessment of quality of experience, QoE, of a network, for example network 2 of Figure 1. In particular, Figure 2 illustrates operations S10, S20 and S30, and optional operations S40 and S50.

Operation S10 may comprise receiving a first number of quality of service, QoS, metrics QoS1. The first number of QoS metrics QoS1 may pertain to a QoS of the network at a first moment in time.

Operation S20 may comprise receiving, from a reference device (for example reference device 4 of Figure 1) subject to the QoE of the network, a first number of quality of experience, QoE, metrics QoE1. The first number of QoE metrics QoE1 pertains to the QoE of the network at a second moment in time. A time difference between the first moment in time and the second moment in time may be less than a predetermined time threshold.

Operation S30 may comprise determining, based on the received first number of QoS metrics QoS1 and the received first number of QoE metrics QoE1, a mapping relationship from at least a subset of the received first number of QoS metrics QoS 1 to at least a subset of the received first number of QoE metrics QoE1, using a machine learning technique.

After operation S30, the method may halt, having produced the mapping relationship for further use.

In a further developed embodiment the method may optionally comprise operations S40 and S50.

Operation S40 may comprise receiving a second number of QoS metrics QoS2. The second number of QoS metrics QoS2 pertains to the QoS of the network at a third moment in time different from the first moment in time.

Operation S50 may comprise mapping at least a subset of the received second number of QoS metrics QoS2 to a second number of QoE metrics QoE2, by means of the mapping relationship, in order to assess QoE of the network.

Figure 3 illustrates schematically another embodiment of a method according to the present invention, for example a further development of the embodiment of Figure 1, for example executed by apparatus 1 of Figure 1.

Operations S10, S20 and S30 of the method illustrated in Figure 3 correspond with the analogously numbered operations of the method illustrated in Figure 2, and will therefore not be explained again.

In optional operation S1, the desired first number of QoS metrics QoS1 and the desired first number of QoE metrics QoE1 may be defined, for example by apparatus 1 shown in Figure 1, for example based on the available QoS and QoE metrics pertaining to the network.

Optionally, the determining of the mapping relationship may comprise the optional operations S21, S22 and S23. Operation S21 may comprise selecting from at least the subset of the received first number of QoS metrics QoS1 a training subset for learning the mapping relationship and a validation subset for evaluating the learned mapping relationship **M.** Operation S22 may comprise learning the mapping relationship **M** based on the selected training subset. Operation S23 may comprise evaluating the learned mapping relationship **M** based on the selected validation subset.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering. These words are to be interpreted as names used for convenience.

Whilst the principles of the invention have been set out above in connection with specific embodiments, it is to be understood that this description is merely made by way of example and not as a limitation of the scope of protection which is determined by the appended claims.

## Claims

1. A method of automating assessment of quality of experience, QoE, of a network; the method comprising the following steps performed by a computing device:
- receiving a first number of quality of service, QoS, metrics, wherein the first number of QoS metrics pertains to a QoS of the network at a first moment in time;
- receiving, from a reference device subject to the QoE of the network, a first number of quality of experience, QoE, metrics, wherein the first number of QoE metrics pertains to the QoE of the network at a second moment in time, wherein a time difference between the first moment in time and the second moment in time is less than a predetermined time threshold; and
- based on the received first number of QoS metrics and the received first number of QoE metrics, determining a mapping relationship from at least a subset of the received first number of QoS metrics to at least a subset of the received first number of QoE metrics, using a machine learning technique.

2. The method of claim 1, comprising:
- receiving a second number of QoS metrics, wherein the second number of QoS metrics pertains to the QoS of the network at a third moment in time different from the first moment in time; and
- mapping at least a subset of the received second number of QoS metrics to a second number of QoE metrics, by means of the mapping relationship, in order to assess QoE of the network.

3. The method of any one of the previous claims, wherein the determining of the mapping relationship comprises:
- determining a correlation between the first number of QoS metrics and the first number of QoE metrics; and
- based on the determined correlation, selecting a subset of the first number of QoS metrics as the subset from which to map in the mapping relationship; and
wherein the selecting of the subset of the first number of QoS metrics preferably comprises selecting QoS metrics from the first number of QoS metrics, for which selected QoS metrics the determined correlation exceeds a predetermined threshold.

4. The method of any one of the previous claims, wherein the determining of the mapping relationship comprises:
- selecting from at least the subset of the received first number of QoS metrics a training subset for learning the mapping relationship and a validation subset for evaluating the learned mapping relationship;
- learning the mapping relationship based on the selected training subset; and
- evaluating the learned mapping relationship based on the selected validation subset.

5. The method of claim 4, wherein the selecting of the validation subset comprises:
- determining a variance for at least one QoS metric of the received first number of QoS metrics; and
- based on the determined variance, selecting QoS metrics from the at least one QoS metric as the validation subset.

6. The method of any one of the previous claims, wherein the machine learning technique comprises estimating a regression model for mapping from at least the subset of the received first number of QoS metrics to at least the subset of the received first number of QoE metrics.

7. The method of any one of the previous claims, wherein at least one of the first number of QoS metrics and the second number of QoS metrics comprises any one or more of the following metrics: retransmission rate; error rate; signal strength; channel utilization; activity factor; contention factor; discarded packets; transmit power; signal-to-noise ratio, SNR; signal-to-noise plus interference ratio, SINR; and queueing statistics.

8. The method of any one of the previous claims, wherein at least one of the first number of QoE metrics and the second number of QoE metrics comprises any one or more of the following metrics: buffering ratio; rate of buffering events; bitrate; streaming rate; burst streaming rate; video quality; initial buffering time; stalling frequency; and average duration of stalls.

9. A computer program product comprising a computer-executable program of instructions for performing, when executed on a computer, the steps of the method of any one of claims 1-8.

10. An apparatus for automating assessment of quality of experience, QoE, of a network; the apparatus comprising a processor configured for executing a computer-executable program of instructions for performing the following:
- receiving a first number of quality of service, QoS, metrics, wherein the first number of QoS metrics pertains to a QoS of the network at a first moment in time;
- receiving, from a reference device subject to the QoE of the network, a first number of quality of experience, QoE, metrics, wherein the first number of QoE metrics pertains to the QoE of the network at a second moment in time, wherein a time difference between the first moment in time and the second moment in time is less than a predetermined time threshold; and
- based on the received first number of QoS metrics and the received first number of QoE metrics, determining a mapping relationship from at least a subset of the received first number of QoS metrics to at least a subset of the received first number of QoE metrics, using a machine learning technique.

11. The apparatus of claim 10, wherein the processor is further configured for:
- receiving a second number of QoS metrics, wherein the second number of QoS metrics pertains to the QoS of the network at a third moment in time different from the first moment in time; and
- mapping at least a subset of the received second number of QoS metrics to a second number of QoE metrics, by means of the mapping relationship, in order to assess QoE of the network.

12. The apparatus of any one of the claims 10-11, wherein the processor is further configured for:
- determining a correlation between the first number of QoS metrics and the first number of QoE metrics; and
- based on the determined correlation, selecting a subset of the first number of QoS metrics as the subset from which to map in the mapping relationship; and
wherein the selecting of the subset of the first number of QoS metrics preferably comprises selecting QoS metrics from the first number of QoS metrics, for which selected QoS metrics the determined correlation exceeds a predetermined threshold.

13. The apparatus of any one of the claims 10-12, wherein the processor is further configured for:
- selecting from at least the subset of the received first number of QoS metrics a training subset for learning the mapping relationship and a validation subset for evaluating the learned mapping relationship;
- learning the mapping relationship based on the selected training subset; and
- evaluating the learned mapping relationship based on the selected validation subset.

14. The apparatus of claim 13, wherein the processor is further configured for:
- determining a variance for at least one QoS metric of the received first number of QoS metrics; and
- based on the determined variance, selecting QoS metrics from the at least one QoS metric as the validation subset.

15. The apparatus of any one of the claims 10-14, wherein the processor is configured for performing the machine learning technique by estimating a regression model for mapping from at least the subset of the received first number of QoS metrics to at least the subset of the received first number of QoE metrics.

## Amended claims

### Amended claims in accordance with Rule 137(2) EPC.

1. A method of automating assessment of quality of experience, QoE, of a network (2); the method comprising the following steps performed by a computing device (1):
- receiving (S10) a first number of quality of service, QoS, metrics (QoS1), wherein the first number of QoS metrics pertains to a QoS of the network at a first moment in time;
- receiving (S20), from a reference device (4) subject to the QoE of the network, a first number of quality of experience, QoE, metrics (QoE1), wherein the first number of QoE metrics pertains to the QoE of the network at a second moment in time, wherein a time difference between the first moment in time and the second moment in time is less than a predetermined time threshold; and
- based on the received first number of QoS metrics and the received first number of QoE metrics, determining (S30) a mapping relationship (M) from at least a subset of the received first number of QoS metrics to at least a subset of the received first number of QoE metrics, using a machine learning technique.

2. The method of claim 1, comprising:
- receiving (S40) a second number of QoS metrics (QoS2), wherein the second number of QoS metrics pertains to the QoS of the network at a third moment in time different from the first moment in time; and
- mapping (S50) at least a subset of the received second number of QoS metrics to a second number of QoE metrics (QoE2), by means of the mapping relationship, in order to assess QoE of the network.

3. The method of any one of the previous claims, wherein the determining of the mapping relationship comprises:
- determining a correlation between the first number of QoS metrics and the first number of QoE metrics; and
- based on the determined correlation, selecting a subset of the first number of QoS metrics as the subset from which to map in the mapping relationship; and
wherein the selecting of the subset of the first number of QoS metrics preferably comprises selecting QoS metrics from the first number of QoS metrics, for which selected QoS metrics the determined correlation exceeds a predetermined threshold.

4. The method of any one of the previous claims, wherein the determining of the mapping relationship comprises:
- selecting (S21) from at least the subset of the received first number of QoS metrics a training subset for learning the mapping relationship and a validation subset for evaluating the learned mapping relationship;
- learning (S22) the mapping relationship based on the selected training subset; and
- evaluating (S23) the learned mapping relationship based on the selected validation subset.

5. The method of claim 4, wherein the selecting of the validation subset comprises:
- determining a variance of at least one QoS metric of the received first number of QoS metrics; and
- based on the determined variance, selecting QoS metrics from the at least one QoS metric as the validation subset.

6. The method of any one of the previous claims, wherein the machine learning technique comprises estimating a regression model for mapping from at least the subset of the received first number of QoS metrics to at least the subset of the received first number of QoE metrics.

7. The method of any one of the previous claims, wherein at least one of the first number of QoS metrics and the second number of QoS metrics comprises any one or more of the following metrics: retransmission rate; error rate; signal strength; channel utilization; activity factor; contention factor; discarded packets; transmit power; signal-to-noise ratio, SNR; signal-to-noise plus interference ratio, SINR; and queueing statistics.

8. The method of any one of the previous claims, wherein at least one of the first number of QoE metrics and the second number of QoE metrics comprises any one or more of the following metrics: buffering ratio; rate of buffering events; bitrate; streaming rate; burst streaming rate; video quality; initial buffering time; stalling frequency; and average duration of stalls.

9. A computer program product comprising a computer-executable program of instructions for performing, when executed on a computer, the steps of the method of any one of claims 1-8.

10. An apparatus (1) for automating assessment of quality of experience, QoE, of a network (2); the apparatus comprising a processor configured for executing a computer-executable program of instructions for performing the following:
- receiving a first number of quality of service, QoS, metrics (QoS1), wherein the first number of QoS metrics pertains to a QoS of the network at a first moment in time;
- receiving, from a reference device (4) subject to the QoE of the network, a first number of quality of experience, QoE, metrics (QoE1), wherein the first number of QoE metrics pertains to the QoE of the network at a second moment in time, wherein a time difference between the first moment in time and the second moment in time is less than a predetermined time threshold; and
- based on the received first number of QoS metrics and the received first number of QoE metrics, determining a mapping relationship (M) from at least a subset of the received first number of QoS metrics to at least a subset of the received first number of QoE metrics, using a machine learning technique.

11. The apparatus of claim 10, wherein the processor is further configured for:
- receiving a second number of QoS metrics (QoS2), wherein the second number of QoS metrics pertains to the QoS of the network at a third moment in time different from the first moment in time; and
- mapping at least a subset of the received second number of QoS metrics to a second number of QoE metrics (QoE2), by means of the mapping relationship, in order to assess QoE of the network.

12. The apparatus of any one of the claims 10-11, wherein the processor is further configured for:
- determining a correlation between the first number of QoS metrics and the first number of QoE metrics; and
- based on the determined correlation, selecting a subset of the first number of QoS metrics as the subset from which to map in the mapping relationship; and
wherein the selecting of the subset of the first number of QoS metrics preferably comprises selecting QoS metrics from the first number of QoS metrics, for which selected QoS metrics the determined correlation exceeds a predetermined threshold.

13. The apparatus of any one of the claims 10-12, wherein the processor is further configured for:
- selecting from at least the subset of the received first number of QoS metrics a training subset for learning the mapping relationship and a validation subset for evaluating the learned mapping relationship;
- learning the mapping relationship based on the selected training subset; and
- evaluating the learned mapping relationship based on the selected validation subset.

14. The apparatus of claim 13, wherein the processor is further configured for:
- determining a variance of at least one QoS metric of the received first number of QoS metrics; and
- based on the determined variance, selecting QoS metrics from the at least one QoS metric as the validation subset.

15. The apparatus of any one of the claims 10-14, wherein the processor is configured for performing the machine learning technique by estimating a regression model for mapping from at least the subset of the received first number of QoS metrics to at least the subset of the received first number of QoE metrics.
